# EUROPÄISCHE PATENTSCHRIFT

(11) **EP 1 256 271 B1**
(45) Veröffentlichungstag und Bekanntmachung des Hinweises auf die Patenterteilung: **23.11.2005**
(21) Anmeldenummer: 02002832.0
(22) Anmeldetag: 08.02.2002
(51) Int. Cl.: A01D 65/02

(54) **Ährenheber für Erntemaschinenmähsysteme**
Grain lifter for the cutter mechanisms of harvesters
Releveur d'épis pour mécanisme de fauchage de moissonneuses

(30) Priorität: 12.05.2001 DE 10123248
(43) Veröffentlichungstag der Anmeldung: 13.11.2002
(73) Patentinhaber: Gebr. Schumacher Gerätebaugesellschaft mbH, 57612 Eichelhardt (DE)
(72) Erfinder: Schumacher, Gustav, 57612 Eichelhardt (DE); Schumacher, Friedrich-Wilhelm, 57612 Eichelhardt (DE)
(74) Vertreter: Harwardt, Günther

(56) Entgegenhaltungen:
- DE-A- 1 507 366
- DE-A- 3 300 769
- DE-A- 4 323 053
- DE-C- 191 691
- US-A- 4 120 138
- US-A- 4 295 328

## Beschreibung

Die Erfindung betrifft einen Ährenheber für Erntemaschinenmähsysteme, die einen Mähbalken mit davon vorstehend angebrachten Mähfingern aufweisen,
- der eine Tragschiene mit einem ersten Ende und einem zweiten Ende aufweist, wobei das erste Ende zur Festlegung am Mähbalken dient ,
- der einen Halmheber aufweist, der mit dem zweiten Ende der Tragschiene verbunden ist,
- der einen Halter aufweist, der zwischen dem ersten Ende und dem zweiten Ende an der Tragschiene befestigt ist, wobei dem Halter Haltemittel zugeordnet sind, die im Abstand zur Tragschiene angeordnet sind und zur Abstützung an dem Mähfinger dienen und wobei der Halter mit den Haltemitteln einen Freigang definiert, der eine Annäherung der Tragschiene an den Mähfinger zulässt, und die Tragschiene einen befestigungsseitigen Abschnitt zwischen dem Halter und dem ersten Ende und einen halmheberseitigen Abschnitt zwischen dem Halter und dem Bereich des zweiten Endes, mit dem der Halmheber verbunden ist, umfasst, wobei die Tragschiene im halmheberseitigen Abschnitt eine höhere Steifigkeit aufweist als im befestigungsseitigen Abschnitt.

Bei den bekannten Erntemaschinenmähsystemen sind entlang des Mähbalkens verteilt Mähfinger angeordnet. Diese führen einen Messerbalken und bilden die Gegenschneide für die Schneiden der am hin- und hergehend bewegbaren Messerbalken angebrachten Mähklingen. Um abgeknicktes oder lagerndes Halmgut sicher mähen zu können werden Ährenheber eingesetzt, die das Halmgut anheben. Solche Ährenheber bestehen aus einer Tragschiene, die mit ihrem ersten Ende am Mähbalken festgelegt ist und die ferner über einen Halter und daran angebrachte Haltemittel sich an der Mähfingerspitze abstützen. Das zweite Ende der Tragschiene ist mit einem Halmheber verbunden, der dazu winkelig angeordnet ist. Der Halter dient dazu, den Ährenheber parallel zur Fahrtrichtung der Erntemaschine ausgerichtet zu halten. Damit der Ährenheber mit seiner Spitze, die durch den Stoßbereich des Halmhebers mit der Tragschiene gebildet wird, am Boden geführt wird und den Bodenunebenheiten folgen kann, besteht die Tragschiene vorzugsweise aus einem Federstahl. Dabei bewegt sich der Halter relativ zur Mähfingerspitze. Der Halter selbst ist in der Regel an die Tragschiene angenietet. Ein solcher Ährenheber ist in der DE 43 23 053 A1 beschrieben.

Ein Ährenheber, der vom Aufbau her der eingangs geschilderten Ausgangsbasis entspricht, ist in der DE - A -33 00 769 beschrieben. Die Tragschiene ist unter dem Mähfinger angeordnet. Dabei ist zum befestigungsseitigen Abschnitt der Tragschiene beschrieben, dass dessen Federkraft durch Formgebung herabgesetzt sei. Zur Herabsetzung werden eine Querschnittsverkleinerung, beispielsweise durch Ausstanzungen, durch Verringerung der Breite oder der Dicke oder ein wellenförmiger oder winkliger Verlauf vorgeschlagen. Dies soll zu einem leichteren Einfedern des Ährenhebers führen.

Die DE -C-191 691 beschreibt einen Ährenheber, dessen Tragschiene aus zwei getrennten, jedoch fest miteinander verbundenen Teilschienen gebildet ist. Die Tragschiene ist oberhalb des Mähfingers angeordnet. Sie ist über eine im Verbindungsbereich der beiden Teilschienen angeordnete Schraube auf dem Mähfinger in einem Bereich zwischen den beiden Enden abgestützt und mit einem Ende fest mit dem Mähbalken verbünden. Die halmheberseitige Teilschiene soll unelastisch und die befestigungsseitige Teilschiene elastisch ausgebildet sein. Hierdurch soll erreicht werden, dass bei Belastung des Halmhebers nur die Elastizitätseigenschaften der halmheberseitigen Teilschiene zur Wirkung kommen.

In der US-4 120 138 ist ein Ährenheber beschrieben, der eine Tragschiene umfasst, deren eines Ende zur Befestigung am Mähbalken dient und an deren anderem Ende der Halmheber angebracht ist. Zwischen den beiden Enden ist ein Halter angebracht, der zur Abstützung des Ährenhebers an einem Mähfinger dient Da in diesem Bereich der Anbringung des Halters die größte Kräfte im Einsatz wirksam sein sollen, ist dieser Bereich versteift ausgebildet.

Die Mähfinger moderner Erntemaschinenmähsysteme, beispielsweise solche für Mähdrescher, sind in Arbeitsstellung meist im Bereich von 12° bis 18° nach unten zum Boden hin geneigt angeordnet, um der gegen die Bewegungsrichtung der Erntemaschine im Mähbetrieb nachfolgenden Schneidwerkswanne einen entsprechenden Freiraum zum Boden zu verschaffen und trotzdem genügend tief mähen zu können. Aus dem gleichen Grunde ist die Tragschiene des Ährenhebers im montierten Zustand ebenfalls zwangsläufig zum Boden hin geneigt.

Diese Neigung zum Boden hin muss aber wieder, zumindest ab der Mähfingerspitze, in eine bodenparallele Richtung der Tragschiene überführt werden, sonst würde der Ährenheber zu steil auf den Boden treffen und in den Boden gedrückt werden. Die Tragschiene wird daher nach oben abgewinkelt.

Um einen Freiraum zwischen dem Halter und dem dem Halmheber nahen Gleitbereich der Tragschiene zu erreichen, sind die Tragschienen häufig im Bereich des oder von dem Halter nach oben abgewinkelt bzw. gebogen und dann wieder bis zum Gleitbereich und damit bis zur Bodenberührung nach unten geführt, so dass der Gleitbereich auf dem Boden aufliegt. Dieser Gleitbereich ist gleitschuhartig geformt und an seine Spitze ist der Halmheber angeschweißt. Der gleitschuhartige Teil der Tragschiene ist im Querschnitt gesehen nach unten ausgewölbt, damit deren Seitenkanten nicht in den Boden einschneiden, wenn bei Kurvenfahrt der Ährenheber seitlich belastet wird.

Ein solcher Ährenheber ist in der GB-PS 1 396 078 beschrieben. Dessen Tragschiene ist im Gleitbereich nach unten und im anschließenden Bereich in Richtung des Halters nach oben gewölbt profiliert. Der Übergang von nach unten gerichteter Wölbung zu nach oben gerichteter Wölbung erfolgt dabei zwischen den als Gleitbereich genutzten Abschnitt der Tragschiene und deren zum Halter ansteigenden Bereich. Am Übergang aber ist keinerlei Versteifung der Tragschiene durch Profilierung gegeben. Genau hier knickt die Tragschiene ein, wenn der Halmheber stärker belastet wird.

In der DE-PS 1 188 853 ist ein Ährenheber beschrieben, dessen Tragschiene mittels eines Halters oberhalb eines Mähfingers befestigt wird. Die Tragschiene dieses Ährenhebers ist in ihrem Gleitbereich nicht profiliert, sondern lediglich ihr steil zum Halter ansteigender Bereich. Die Tragschiene hat dadurch Federeigenschaften nur im bodenparallelen Gleitbereich.

In der DE-OS 25 31 435 ist ein Ährenheber beschrieben, dessen Tragschiene im Bereich des Halters nach unten oder oben gewölbt profiliert ist. Die Tragschiene ist vom Halmheberbefestigungsbereich bis zum Halter durchgehend unprofiliert.

Diese bekannten Ährenheber haben den Nachteil, dass dann, wenn der Halmheber von starkem Erntegut belastet wird, die Tragschiene gleich hinter dem Gleitbereich, bzw. in der Ausführungsform nach der DE-PS 1 188 853 in etwa der Mitte des Gleitbereiches abknickend einfedert, was dazu führt, dass die Ährenheberspitze nach oben gebogen wird und beispielweise bei Lagergetreide aus dem Emtegut austritt. Das führt dazu, dass sich dann, wenn sich ein einzelner Ährenheber hochbiegt, der benachbarte Ährenheber aber nicht, das Stroh von dem einen Ährenheber nach unten und vom benachbarten Ährenheber nach oben gedrückt wird. Dieser Strohwulst kann nicht mehr nach hinten abfließen und führt zur Blockade des Messerbalkens. Der Fahrer muss die Maschine zurücksetzen, damit sich die Strohansammlung aus dem Messerbalken löst.

Der Erfindung liegt die Aufgabe zugrunde, einen Ährenheber vorzuschlagen, bei dem das dem Befestigungsbereich des Halmhebers nahe Ende der Tragschiene auch bei einer stärkeren Belastung des Halmhebers zumindest annähernd in seiner Ausrichtung zum Boden verbleibt.

Diese Aufgabe wird erfindungsgemäß dadurch gelöst, dass die Tragschiene aus einem Flachmaterial hergestellt ist, das im halmheberseitigen Abschnitt durch einen im Querschnitt bogenförmig gewölbten Verlauf versteift ausgebildet ist.

Die Einfederungsmöglichkeit der Tragschiene wird also in dem Bereich zwischen dem Ende der Tragschiene, an dem der Halmheber befestigt ist, und dem Halter sehr stark eingeschränkt bzw. ganz aufgehoben. Wird der Gleitbereich der Tragschiene des Ährenhebers durch eine Bodenwelle nach oben gedrückt, federt die Tragschiene dann nicht mehr direkt hinter dem Halmheber und auch kaum noch im Bereich zwischen Gleitbereich und Halter nach oben aus, sondern der Einfederungsbereich wird hinter den Halter in den Bereich von diesem zum ersten Ende der Tragschiene verlagert. Die in dem Halter vertikal vorhandene Bewegungsmöglichkeit gegenüber der Mähfingerspitze lässt es dabei zu, dass sich die Ährenheberspitze bis zu 10 cm relativ zur Mährfingerspitze anheben lässt und dadurch einer Bodenwelle ausweichen kann. Je weiter die federelastische Biegung nach hinten zum ersten Ende verlegt wird, desto weniger verändert sich der Anstellwinkel der Ährenheberspitze gegenüber dem Mähfinger. Der Gleitbereich der Trageschiene des Ährenhebers bleibt dabei mit einem längeren Abschnitt im Kontakt zum Boden, wodurch der Verschleiß reduziert wird. Er wird bei Belastung auch nicht aus dem Emtegut herausgeführt.

Durch die entsprechend den Anforderungen für eine steife Ausbildung mehr oder weniger starke Profilierung wird die Tragschiene in diesem Bereich auch so viel stabiler, dass zur Herstellung ein schwächeres Ausgangsmaterial eingesetzt werden kann und dadurch auch eine Kostenreduzierung erreicht wird. Der unmittelbare Bereich am zweiten Ende ist durch die Befestigung des Halmhebers an der Tragschiene bereits ausreichend versteift, so dass sich die Profilierung auf den anschließenden Bereich erstreckt. Dies ist insbesondere der gleitschuhartige Bereich, mit dem die Tragschiene auf dem Boden aufliegt, und der daran anschließende Bereich bis zum Halter. Unter biegeelastischer Gestaltung für den Bereich zwischen dem Halter und dem ersten Ende ist zu verstehen, dass eine Auslenkung dieses Bereiches bei Belastung des Halmhebers in einem Maße, die über die normale Belastung beim normalen Mähen auf ebener Fläche hinausgeht, eintritt. In diesem Fall soll dann die Tragschiene sich dem Mähfinger im Bereich des Freiganges dem Halter annähern.

Ein bevorzugtes Ausführungsbeispiel der Erfindung ist in der Zeichnung schematisch dargestellt.

Es zeigt
- Figur 1: eine Seitenansicht eines an einem Mähbalken und Mähfinger eines Erntemaschinenmähsystems festgelegten Ährenhebers,
- Figur 2: einen Schnitt II-II gemäß Figur 1, im vergrößerten Maßstab im Verhältnis zu Figur 1,
- Figur 3: einen Schnitt III-III gemäß Figur 1, durch die Tragschiene im vergrößerten Maßstab im Verhältnis zu Figur 1.

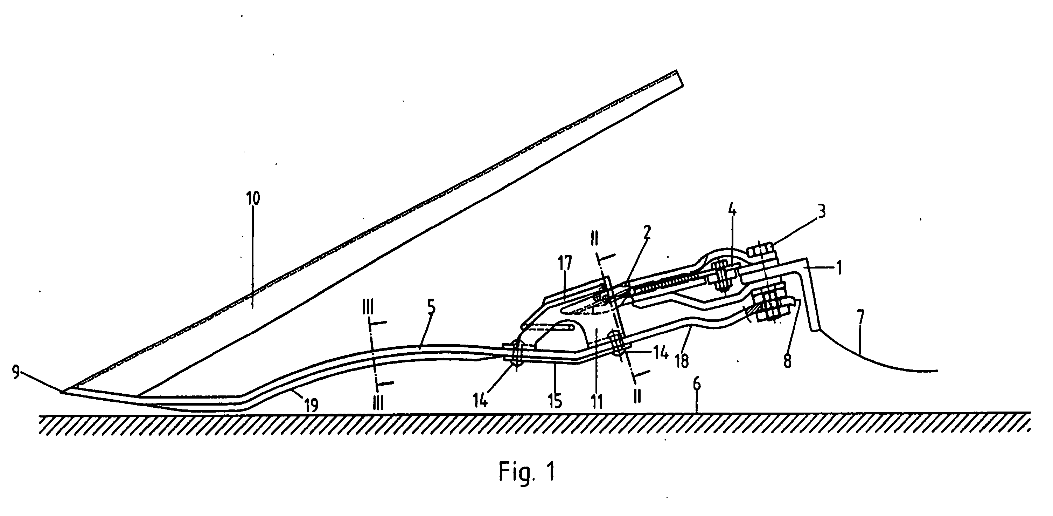

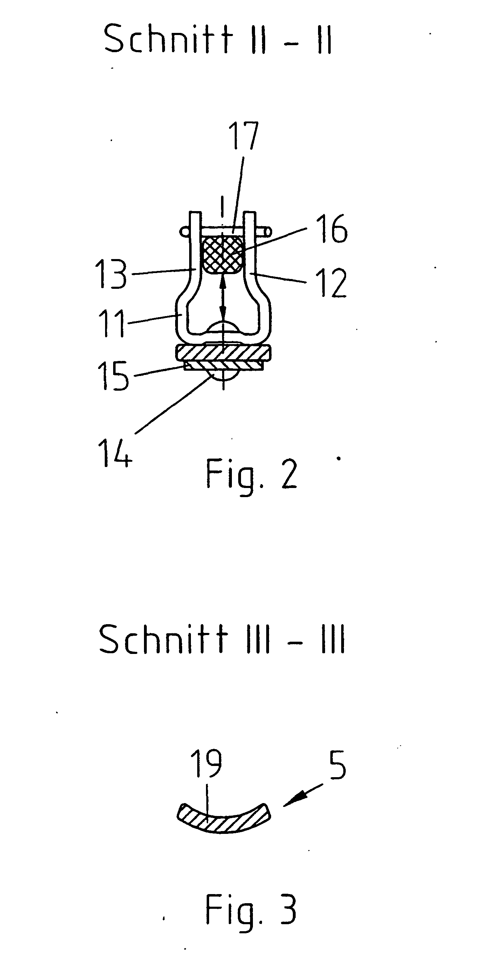

In Figur 1 ist der Mähbalken 1 in schematischer Darstellung erkennbar, von dem ein Mähfinger 2 vorstehend dargestellt ist. Dieser ist über eine Schraube 3 am Mähbalken 1 festgelegt. Es sind in die Zeichenebene hinein, bzw. aus dieser heraus mehrere weitere Mähfinger 2 dem Mähbalken 1 mit Abstand zueinander zugeordnet. Die Mähfinger 2 dienen zur Führung eines Messerbalkens 4, der Mähklingen zum Abtrennen des Erntegutes aufweist. Der Mähfinger 2 steht bei abgesenktem Mähtisch in einem Winkel von etwa 18° mit seiner Spitze zum Boden 6 geneigt, damit möglichst tief geschnitten werden kann, ohne den Mähtisch so weit absenken zu müssen, dass die Schneidwerkswanne 7 auf dem Boden 6 zur Auflage kommt. Das erste Ende 8 einer aus einem Flachmaterial als Ausgangsmaterial hergestellten Tragschiene 5 ist beispielsweise über eine gabelförmige Ausbildung mit einer über die Schraube 3 festgelegten Scheibe mit Ringnut am Mähbalken 1 festlegbar. An dem dem ersten Ende 8 entfernten zweiten Ende 9 ist an der Tragschiene 5 ein Halmheber 10 befestigt, der im Winkel zur Tragschiene 5 ansteigend in Richtung zum Mähbalken 1 hin verläuft. Die Tragschiene 5 ist mittels eines Halters 11 am Mähfinger 2, bzw. dessen der Tragschiene 5 abgewandten oberen Fläche abgestützt. Wie aus Figur 2 erkennbar, weist der Halter 11 zwei zueinander parallel verlaufende Schenkel 12, 13 auf, die miteinander verbunden sind. Gegen die dem Halmheber 10 abgewandte Fläche der Tragschiene 5 liegt eine Verstärkungsplatte 15 an, die zusammen mit dem Halter 11 über Nieten 14 mit der Tragschiene 5 verbunden ist. Zwischen den beiden Schenkeln 12, 13 wird der Mähfinger 2 mit seiner Mähfingerspitze 16 aufgenommen. Um unterschiedliche Einstellungen des Halters 11 und damit der Tragschiene 5 zum Mähfinger 2 zu erreichen, sind in den beiden Schenkeln 12, 13 Bohrungen angebracht, die paarweise mit gleichem Abstand zur halmheberseitigen Fläche der Tragschiene 5 angeordnet sind. Diese bilden Bohrungspaare, durch die jeweils ein Steckbolzen 17 hindurchgesteckt werden kann, der sich auf der der Tragschiene 5 entfernten oberen Fläche des Mähfingers 2 abstützt. Die Mähfingerspitze 16 ist zwischen den beiden Schenkeln 12, 13 geführt und kann zur Tragschiene 5 eine Relativbewegung ausführen, wie durch den Doppelpfeil In Figur 2 angedeutet, so dass bei Bodenunebenheiten ein Einfedem der Tragschiene 5, wie nachfolgend beschrieben, möglich ist.

Der befestigungsseitige Abschnitt der Tragschiene 5 zwischen dem Halter 11 und dem ersten Ende 8 ist mit 18 bezeichnet. Dieser befestigungsseitige Abschnitt 18 ist biegeelastisch gestaltet, so dass beim Einwirken höherer Kräfte auf den Halmheber sich dieser Bereich verformt, da der befestigungsseitige Bereich 18 der Tragschiene 5 zum ersten Ende 8 hin im Bereich der Schraube 3 eingespannt ist und sich die Tragschiene im Bereich des Halters 11 dem Mähfinger 2 annähern kann, während der halmheberseitige Abschnitt 19 der Tragschiene 5 biegesteif gestaltet ist und sich bei dem Auftreten solcher Belastungen, die zu einer elastischen Biegung des befestigungsseitigen Abschnittes 18 führen, keine oder nur eine unbedeutende Verformung erfährt. Im Bereich des zweiten Endes 9 ist der Halmheber 10 an der Tragschiene 5 befestigt, so dass in diesem Bereich alleine durch die Befestigung eine genügende Steifigkeit erreicht ist, während daran anschließend bis zum Halter 11 die Tragschiene 5 wie aus Figur 3 ersichtlich, gewölbt ist um die nötige Steifigkeit zu erzielen. Diese Wölbung erstreckt sich über den gleitschuhartig auf dem Boden 6 geführten Bereich bis zu dem vom Boden sich entfernenden und zum Halter 11 erstreckenden Bereich.

## Patentansprüche

1. Ährenheber für Erntemaschinenmähsysteme, die einen Mähbalken (1) mit davon vorstehend angebrachten Mähfingern (2) aufweisen,
- der eine Tragschiene (5) mit einem ersten Ende (8) und einem zweiten Ende (9) aufweist, wobei das erste Ende (8) zur Festlegung am Mähbalken dient (1),
- der einen Halmheber (10)aufweist, der mit dem zweiten Ende (9) der Tragschiene verbunden ist,
- der einen Halter aufweist, der zwischen dem ersten Ende (8) und dem zweiten Ende (9) an der Tragschiene (5) befestigt ist, wobei dem Halter (11) Haltemittel (17) zugeordnet sind, die im Abstand zur Tragschiene (5) angeordnet sind und zur Abstützung an dem Mähfinger (2) dienen und wobei der Halter (11) mit den Haltemitteln (17) einen Freigang definiert, der eine Annäherung der Tragschiene (5) an den Mähfinger (2, 16) zulässt, und die Tragschiene (5) einen befestigungsseitigen Abschnitt (18) zwischen dem Halter (11) und dem ersten Ende (8) und einen halmheberseitigen Abschnitt (19) zwischen dem Halter (11) und dem Bereich des zweiten Endes (9), mit dem der Halmheber (10) verbunden ist, umfasst, wobei die Tragschiene (5) im halmheberseitigen Abschnitt (19) eine höhere Steifigkeit aufweist als im befestigungsseitigen Abschnitt (18),
**dadurch gekennzeichnet**
**dass** die Tragschiene (5) aus einem Flachmaterial hergestellt ist, das im halmheberseitigen Abschnitt (19) durch einen im Querschnitt bogenförmig gewölbten Verlauf versteift ausgebildet ist.

## Claims

1. Grain lifter for cutting systems of harvesting machines, having a bed plate (1) with reaping fingers (2) projectingly attached thereto,
- having a support bar (5) with a first end (8) and a second end (9), wherein the first end (8) serves for retaining on the bed plate (1),
- having a stem lifter (10), connected to the second end (9) of the support bar,
- having a holder, attached on the support bar (5) between the first end (8) and the second end (9), wherein retaining means (17) are arranged to the holder (11), which are arranged with a distance to the support bar (5) and serve to support on the reaping finger (2) and wherein the holder (11) with the retaining means (17) defines a free motion gap; enabling an approach of the support bar (5) towards the reaping finger (2, 16), and the support bar (5) comprising an attachment-side portion (18) between the holder (11) and the first end (8) and a stem lifter-side portion (19) between the holder (11) and the area of the second end (9), with which the stem lifter (10) is connected, wherein the support bar (5) has a higher rigidity in the stem lifter-side portion (19) than in the attachment-side portion (18),
**characterised in that**
the support bar (5) is made from a flat material, which is formed reinforced in the stem lifter-side portion (19) by being formed arched in cross-section.

## Revendications

1. Releveur d'épis pour les mécanismes de coupe des machines de récolte, qui comportent une barre de coupe (1) avec des doigts de coupe (2) agencés en saillie sur celle-ci,
- lequel comporte une barre de support (5) avec une première extrémité (8) et une deuxième extrémité (9), la première extrémité (8) étant destinée à être fixée sur la barre de coupe (1),
- lequel comporte un releveur de tiges (10), qui est assemblé à la deuxième extrémité (9) de la barre de support (5),
- lequel comporte un support (11) qui est fixé sur la barre de support (5) entre la première extrémité (8) et la deuxième extrémité (9), des moyens de retenue (17) étant associés au support (11), lesquels sont agencés à distance de la barre de support (5) et sont destinés à venir en appui sur les doigts de coupe (2), et le support (11) délimitant avec les moyens de retenue (17) un dégagement, dans lequel la barre de support (5) peut se rapprocher du doigt de coupe (2), et la barre de support (5) comportant une partie (18) du côté fixation entre le support (11) et la première extrémité (8) et une partie (19) du côté releveur de tiges entre le support (11) et la zone de la deuxième extrémité (9), à laquelle le releveur de tiges (10) est assemblé, la barre de support (5) ayant dans la partie (19) du côté releveur de tiges une rigidité supérieure à celle de la partie (18) du côté fixation,
**caractérisé en ce que** la barre de support (5) est réalisée dans un matériau plat qui est rigidifié dans la partie (19) du côté releveur de tiges par un tracé incurvé, en forme d'arc par référence à une coupe transversale
